Europäisches Patentamt

European Patent Office

Office européen des brevets

(11) Veröffentlichungsnummer : **0 119 430**
**B1**

# (12) EUROPÄISCHE PATENTSCHRIFT

(45) Veröffentlichungstag der Patentschrift :
**02.01.86**

(21) Anmeldenummer : **84101227.1**

(22) Anmeldetag : **07.02.84**

(51) Int. Cl.⁴ : **C 02 F 3/28**, C 02 F 9/00

(54) **Verfahren und Vorrichtung zur anaeroben biologischen Reinigung von Abwasser.**

(30) Priorität : **17.02.83 DE 3305476**

(43) Veröffentlichungstag der Anmeldung : *
**26.09.84 Patentblatt 84/39**

(45) Bekanntmachung des Hinweises auf die Patenterteilung : **02.01.86 Patentblatt 86/01**

(84) Benannte Vertragsstaaten :
**AT BE CH DE FR GB IT LI NL SE**

(56) Entgegenhaltungen :
**EP-A- 0 012 476**
**DE-A- 3 036 370**
**GB-A- 1 484 928**

(73) Patentinhaber : **Linde Aktiengesellschaft**
**Abraham-Lincoln-Strasse 21**
**D-6200 Wiesbaden (DE)**

(72) Erfinder : **Morper, Manfred, Dr. rer. nat.**
**Zugspitzstrasse 13**
**D-8035 Gauting (DE)**

(74) Vertreter : **Schaefer, Gerhard, Dr.**
**Linde Aktiengesellschaft Zentrale Patentabteilung**
**D-8023 Höllriegelskreuth (DE)**

**Beschreibung**

Die Erfindung betrifft ein Verfahren zur anaeroben biologischen Reinigung von organische Stoffe enthaltendem Abwasser mit Hilfe von anaeroben Mikroorganismen sowie eine Vorrichtung zur Durchführung des Verfahrens.

Bei der anaeroben Abwasserreinigung werden bekanntlich organische Abwasserinhaltsstoffe in einer Folge von Reaktionsketten stufenweise zu Methan und Kohlendioxid abgebaut. Dabei bestimmt die Umsetzung der am langsamsten metabolisierbaren Stoffe die gesamte Reaktionszeit. Dies führt bei komplex zusammengesetzten Abwässern, bei denen ein Teil der als CSB ausgedrückten organischen Fracht in schwer metabolisierbarer Form, wie z. B. als ungelöste Feststoffe, Polymere oder polykondensierte Aromaten, vorliegt, oft zu langen Reaktionszeiten und großvolumigen Reaktoren. In Gebrauch sind derzeit die verschiedensten Anaerobreaktoren, wie z. B. völlig durchmischte Reaktoren mit einmaligem Durchfluß, anaerobe Belebungsbecken mit Schlammrückführung über ein Nachklärbecken, Aufstromreaktoren mit interner Schlammrückhaltung oder anaerobe Festbettreaktoren. Neben einstufigen Reaktoren werden auch zweistufige Reaktoren mit getrennter Versäuerungs- und Methanisierungsstufe eingesetzt.

Der Erfindung liegt die Aufgabe zugrunde, ein Verfahren der eingangs genannten Art sowie eine Vorrichtung zur Durchführung des Verfahrens so auszugestalten, daß auf einfache und wirtschaftliche Weise unter Einsparung an Reaktorvolumen oder unter Verkürzung der Aufenthaltszeit des Abwassers im Anaerobreaktor eine hohe Reinigungsleistung erzielt werden kann.

Diese Aufgabe wird erfindungsgemäß dadurch gelöst, daß vor dem Einleiten des Hauptstroms des zu reinigenden Abwassers in einen unter anaeroben Bedingungen betriebenen Reaktor aus dem Abwasser die unter anaeroben Bedingungen nur langsam metabolisierbaren, teils im ungelösten und teils im makromolekularen Zustand vorliegenden Stoffe in einen Nebenstrom abgetrennt und unabhängig von den im Hauptstrom des zu reinigenden Abwassers verbleibenden, von anaeroben Mikroorganismen schnell abbaubaren Stoffen behandelt werden.

Mit der Abtrennung und gesonderten Behandlung der nur langsam metabolisierbaren Stoffe in einem Nebenstrom wird erreicht, daß die Reaktionsgeschwindigkeit der am langsamsten ablaufenden Reaktionen, nämlich die Überführung der ungelösten Stoffe durch Enzyme in gelöste Stoffe sowie die Hydrolyse makromolekularer Stoffe, wie Polysaccharide, Proteine und Fette, nicht länger bestimmend ist für die hydraulische Verweilzeit des Abwassers im Anaerobreaktor des Hauptstroms. Damit kann das Volumen dieses Anaerobreaktors kleiner als bisher gewählt werden oder aber es stellt sich bei gleichbleibendem Reaktorvolumen ein besserer CSB-Abbaugrad ein.

Was die Behandlung der im Nebenstrom abgetrennten Stoffe betrifft, so werden diese vorteilhafterweise aufkonzentriert und zumindest teilweise ebenso anaeroben Bedingungen ausgesetzt. Damit können die nur langsam metabolisierbaren Stoffe unter Verwendung eines kleinen Reaktorvolumens in gelöste und ein kleines Molekulargewicht aufweisende Stoffe wie Zucker, Aminosäuren, Fettsäuren oder Glyzerin überführt werden. Mit der Aufkonzentrierung der im Nebenstrom abgetrennten Stoffe ist insgesamt gesehen für die Behandlung des zulaufenden Abwassers ein kleineres Gesamtreaktorvolumen als bisher ausreichend.

Zweckmäßigerweise werden die im Nebenstrom behandelten Stoffe dem im Hauptstrom angeordneten, unter anaeroben Bedingungen betriebenen Reaktor zugeführt. Dies hat den Vorteil, daß für die weitere Aufbereitung dieser Stoffe keine gesonderte Behandlung notwendig ist und diese im Anaerobreaktor des Hauptstroms zur Methanerzeugung beitragen.

Darüber hinaus besteht jedoch auch die Möglichkeit, die Behandlung der im Nebenstrom abgetrennten Stoffe zumindest teilweise unter aeroben Bedingungen durchzuführen. Dies ist dann zweckmäßig, wenn im Anaerobreaktor des Hauptstroms nur ein Teilabbau durchgeführt wird und dem Anaerobreaktor eine aerobe Behandlungsstufe für den weiteren Abbau der Abwasserinhaltsstoffe nachgeschaltet ist. Die vor dem Anaerobreaktor in den Nebenstrom abgetrennten, nur langsam metabolisierbaren Stoffe können dann direkt der aeroben Behandlungsstufe zugeführt werden oder aber auch erst nachdem sie bereits aufkonzentriert und unter anaeroben Bedingungen in gelöste, ein kleines Molekulargewicht aufweisende Stoffe überführt worden sind.

Die Abtrennung der langsam metabolisierbaren Stoffe aus dem Hauptstrom wird vorteilhafterweise unter Zugabe von Fällungs- und/oder Flockungs- und/oder Adsorptionsmitteln auf mechanischem Wege durchgeführt. Als Zugabemittel können dabei beispielsweise Eisen- oder Aluminiumhydroxid, Aktivkohle, Betonit oder Bleicherde verwendet werden. Zur Abtrennung auf mechanischem Wege kann beispielsweise eine Sedimentation, eine Flotation, eine Filtration oder eine Zentrifugierung vorgesehen werden. Da insbesondere makromolekulare Stoffe für eine Adsorption oder Fällung besonders gut geeignet sind, wird auf diese Weise erreicht, daß in den Anaerobreaktor des Hauptstroms tatsächlich im wesentlichen nur die leicht metabolisierbaren Stoffe gelangen.

Eine Vorrichtung zur Durchführung des Verfahrens umfaßt mindestens einen unter anaeroben Bedingungen betriebenen Anaerobreaktor, der einen Zulauf für zu behandelndes Abwasser, einen Ablauf für gereinigtes Abwasser sowie eine Gasableitung für Faulgas aufweist. Erfindungsgemäß ist eine solche Vorrichtung dadurch gekennzeichnet, daß dem Zulauf für zu behandeln- des Abwasser eine Zugabeeinrichtung für Fällungs- und/oder Flockungs- und/oder Adsorptionsmittel sowie mindestens eine Trenneinrichtung für ungelöste und/oder ausgeflockte und/oder adsorbierte Stoffe zugeordnet ist und daß an die Trenneinrichtung ein Behandlungsreaktor für die Behandlung der abgetrennten Stoffe angeschlossen ist.

Dieser Behandlungsreaktor kann dabei ebenso als Anaerobreaktor ausgebildet sein, dessen Volumen jedoch relativ klein bemessen sein kann, da die abgetrennten Stoffe für ihre Umsetzung in schnell metabolisierbare Stoffe gut aufkonzentriert werden können. Andererseits kann der Behandlungsreaktor aber auch ein Aerobreaktor sein, beispielsweise dann, wenn dem Anaerobreaktor des Zulaufs sowieso ein Aerobreaktor für den Weiterabbau der Abwasserinhaltsstoffe nachgeschaltet ist.

Falls der Behandlungsreaktor für die abgetrennten Stoffe ein gesonderter und nicht wie der Aerobreaktor für die Weiterbehandlung des Abwassers ein bereits vorhandener Reaktor ist, ist es zweckmäßig, wenn der Behandlungsreaktor über eine Überleitung mit dem Zulauf zum Anaerobreaktor nach der Trenneinrichtung und/oder mit dem Anaerobreaktor verbunden ist. Damit können dann die umgesetzten, nunmehr in leicht metabolisierbarer Form vorliegenden Stoffe im Anaerobreaktor des Hauptstroms zusammen mit den bereits von vornherein in leicht metabolisierbarer Form zulaufenden Stoffe in Methan- und $CO_2$ abgebaut werden.

Weiterhin zweckmäßig ist es, wenn in dem Behandlungsreaktor ein Trägermaterial für Mikroorganismen vorhanden ist, da dann eine hohe Biomassenkonzentration aufrechterhalten und eine schnelle Umwandlung der schwer metabolisierbaren Stoffe in niedermolekulare, gelöste Stoffe durchgeführt werden kann. Als Trägermaterial kommen dabei vor allem makroporöse Materialien mit offenen Makroporen von 0,1 bis 5 mm, wie beispielsweise Schaumstoffe, Keramik, Aktivkohle oder Blähton in Frage, da mit solchen Materialien den Bakterien eine große Oberfläche zur Ansiedlung zur Verfügung gestellt wird, auf der sie sich gleichmäßig und fest fixiert verteilen können, und die Bakterien zu einem dezentralisierten Wachstum gewungen werden. Das Trägermaterial kann aus einem oder mehreren, als feste Einbauten im Reaktor vorhandene Blöcke eines solchen makroporösen Materials oder aus einzelnen Stoffteilchen mit einem Durchmesser von 0,5 bis 50 mm zusammengesetzt sein.

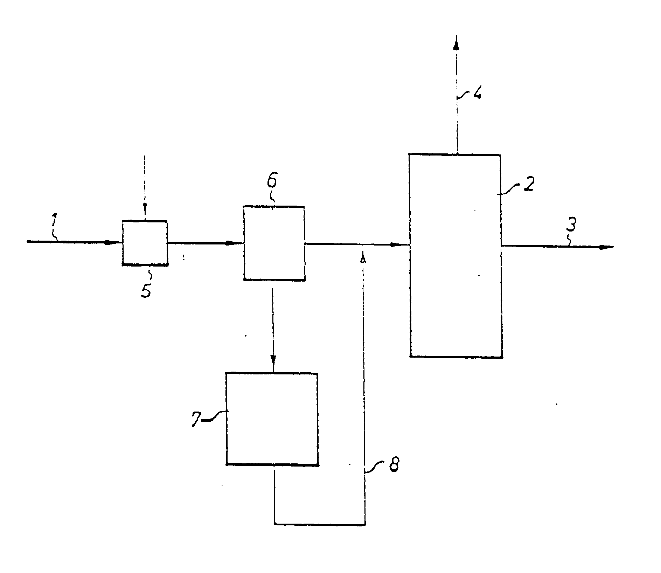

In der Zeichnung ist ein Ausführungsbeispiel einer Vorrichtung zur Durchführung des Verfahrens schematisch dargestellt.

Über einen Zulauf 1 wird zu behandelndes Abwasser einem Anaerobreaktor 2 zugeführt, aus dem behandeltes Abwasser über einen Ablauf 3 und Faulgas über eine Gasableitung 4 abgezogen wird. Dieser Anaerobreaktor kann als völlig durchmischter Reaktor mit einmaligem Durchfluß, als anaerobes Belebungsbecken mit Schlammrückführung über ein Nachklärbecken, als Aufstromreaktor mit interner Schlammrückhaltung oder als anaerober Festbett- oder Wirbelbettreaktor ausgebildet sein. Im Zulauf 1 ist eine Zugabeeinrichtung 5 für Fällungs-, Flockungs-, und/ oder Adsorptionsmittel sowie dieser nachgeschaltet eine Trenneinrichtung 6 für ungelöste, ausgeflockte und/oder adsorbierte Stoffe angeordnet. Die Zugabeeinrichtung 5 ist dabei zweckmäßigerweise so ausgebildet, daß Abwasser und Zugabemittel ausreichend miteinander vermischt werden. Die Trenneinrichtung 6 kann beispielsweise ein Sedimentations- oder Flotationsbecken, ein Filter oder eine Zentrifuge sein. Der aus der Trenneinrichtung abgezogene Schlamm, in dem aufgrund der Adsorptions- oder Fällungsmittel die nur langsam metabolisierbaren Stoffe enthalten sind, wird in einen Behandlungsreaktor 7 geleitet, während die in der Trenneinrichtung 6 verbleibende Flüssigkeit mit den leicht metabolisierbaren Stoffen in den Anaerobreaktor 2, der aufgrund der vorhergehenden Abtrennung der schwer metabolisierbaren Stoffe kleiner als bisher ausgeführt sein kann, überführt wird. Der Behandlungsreaktor 7, der dadurch, daß die abgetrennten Stoffe gut in aufkonzentrierter Form behandelt werden können, trotz der nur langsam ablaufenden Umwandlung der festen in gelöste Stoffe sowie der ebenso langsam ablaufenden Hydrolyse von Makromolekülen relativ klein ausgeführt sein kann, wird zweckmäßigerweise ebenso als Anaerobreaktor betrieben, da dann der Ablauf dieses Behandlungsreaktors über eine Überleitung 8 dem Zulauf 1 des Anaerobreaktors 2 nach der Trenneinrichtung 6 oder direkt dem Anaerobreaktor 2 ohne Beeinflussung der anaeroben Bedingungen in diesem zugeführt werden kann.

Nachfolgend soll ein Zahlenbeispiel verdeutlichen, wie groß die Ersparnis an Reaktorvolumen mit der erfindungsgemäßen Verfahrensweise gegenüber der herkömmlichen Verfahrensweise sein kann:

Bei dem Zahlenbeispiel wird ausgegangen von der Reinigung eines hochbelasteten Abwassers, das in einer Menge von 100 m³/Tag mit einem CSB-Gehalt von 20 000 mg/l (= 2 000 kg/Tag) anfällt. Die als CSB ausgedrückte organische Fracht des Abwassers soll sich dabei zu 50 % aus leicht abbaubaren Stoffen (= 1 000 kg $CSB_x$/Tag), zu 40 % aus schwer abbaubaren Stoffen (= 800 kg $CSB_y$/Tag) und zu 10 % aus nicht abbaubaren Stoffen (= 200 kg $CSB_z$/Tag) zusammensetzen.

Der Abbau erfolgt in den einzelnen Reaktoren im stationären Betriebszustand, was bedeutet, daß die Mikroorganismenpopulationen der verschiedenen Abbaustufen in hoher und konstanter Konzentration vorliegen. Wenn z. B. für den CSB-Abbau eine Reaktionskinetik erster Ordnung gilt, ergibt sich folgende Gleichung :

$$dCSB/dt = k \cdot CSB ; \text{ integriert: } CSB_t = CSB_o/(1 + k \cdot t) \text{ wobei}$$

$CSB_t$ = CSB im Reaktorablauf nach der Reaktionszeit t (kg/d)

$CSB_o$ = CSB im Reaktorzulauf (kg/d)

k = Geschwindigkeitskonstante erster Ordnung (1/d)

t = Reaktionszeit (d)

Für den leicht abbaubaren CSB-Anteil $CSB_x$ gilt z. B. $k_x = 4(1/d)$ während für die Umwandlung des schwer abbaubaren CSB-Anteils $CSB_y$ in leicht abbaubaren $CSB_x$ z. B. $k_y = 0,3(1/d)$ anzusetzen ist.

Aus der vorstehenden Gleichung erster Ordnung ergibt sich bei Verwendung eines konventionellen Reaktors mit Durchsatz des Gesamtabwassers und unter der Voraussetzung, daß 90 % des gesamten CSB leicht abbaubar sind, folgende Verweilzeit :

$$t_x = (CSB_{xo} - CSB_{xt}) / CSB_{xt} \cdot k_x = 2,25 \text{ d}$$

(wobei $CSB_{xt} = CSB_z$)

Damit beträgt das erforderliche Reaktorvolumen für diesen Fall 225 m³.

Für die Umwandlung von schwer abbaubaren $CSB_y$ in leicht abbaubaren $CSB_x$ ergibt sich aus der vorstehenden Gleichung folgende Verweilzeit :

$$t_y = ((CSB_y + CSB_z) - CSB_{yt}) / CSB_{yt} \cdot k_y = 13,3 \text{ d}$$

(wobei $CSB_{yt} = CSB_z$) was einem erforderlichen Reaktorvolumen für die langsame Umwandlung von $CSB_y$ in $CSB_x$ von 1 330 m³ entspricht.

Bei Verwendung der erfindungsgemäßen Verfahrensweise stellt der schwer und nicht abbaubare CSB eine 1 %ige Konzentration dar. Durch Fällungsadsorption kann davon ein z. B. 7 %iger Teilstrom abgetrennt werden, was einem Volumen von 14,3 m³ entspricht. Bei einer Verweilzeit von 13,3 Tagen für die Umwandlung von $CSB_y$ in $CSB_x$ ergibt sich ein Reaktorvolumen von 190 m³. Das gesamte Reaktorvolumen setzt sich somit in diesem Fall zusammen aus 190 m³ für die Umwandlung von aufkonzentrierten $CSB_y$ in $CSB_x$ sowie 225 m³ für die Umwandlung von $CSB_x$ in Methan und $CO_2$, was ein Gesamtvolumen von 415 m³ und im Vergleich zum konventionellen Reaktor eine Ersparnis an Reaktorvolumen von 69 % ergibt.

## Patentansprüche

1. Verfahren zur anaeroben biologischen Reinigung von organische Stoffe enthaltendem Abwasser mit Hilfe von anaeroben Mikroorganismen, dadurch gekennzeichnet, daß vor dem Einleiten des Hauptstroms des zu reinigenden Abwassers in einen unter anaeroben Bedingungen betriebenen Reaktor aus dem Abwasser die unter anaeroben Bedingungen nur langsam metabolisierbaren, teils im ungelösten und teils im makromolekularen Zustand vorliegenden Stoffe in einen Nebenstrom abgetrennt und unabhängig von den im Hauptstrom des zu reinigenden Abwassers verbliebenen, von anaeroben Mikroorganismen schnell abbaubaren Stoffen behandelt werden.

2. Verfahren nach Anspruch 1, dadurch gekennzeichnet, daß die im Nebenstrom abgetrennten Stoffe zur Weiterbehandlung aufkonzentriert und zumindest teilweise ebenso anaeroben Bedingungen ausgesetzt werden.

3. Verfahren nach Anspruch 1 oder 2, dadurch gekennzeichnet, daß die im Nebenstrom behandelten Stoffe dem im Hauptstrom angeordneten, unter anaeroben Bedingungen betriebenen Reaktor zugeführt werden.

4. Verfahren nach Anspruch 1 oder 2, dadurch gekennzeichnet, daß die Behandlung der im Nebenstrom abgetrennten Stoffe zumindest teilweise unter aeroben Bedingungen durchgeführt wird.

5. Verfahren nach einem der Ansprüche 1 bis 4, dadurch gekennzeichnet, daß die Abtrennung der langsam metabolisierbaren Stoffe unter Zugabe von Fällungs- und/oder Flockungs- und/oder Adsorptionsmitteln auf mechanischem Wege durchgeführt wird.

6. Vorrichtung zur Durchführung des Verfahrens nach einem der Ansprüche 1 bis 4 mit mindestens einem unter anaeroben Bedingungen betriebenen Anaerobreaktor, der einen Zulauf für zu behandelndes Abwasser, einen Ablauf für gereinigtes Abwasser sowie eine Gasableitung für Faulgas aufweist, dadurch gekennzeichnet, daß dem Zulauf (1) für zu behandelndes Abwasser eine Zugabeeinrichtung (5) für Fällungs- und/oder Flockungs- und/oder Adsorptionsmittel sowie mindestens eine Trenneinrichtung (6) für ungelöste und/oder ausgeflockte und/oder adsorbierte Stoffe zugeordnet ist und daß an die Trenneinrichtung (6) ein Behandlungsreaktor (7) für die Behandlung der abgetrennten Stoffe angeschlossen ist.

7. Vorrichtung nach Anspruch 6, dadurch gekennzeichnet, daß der Behandlungsreaktor (7) über eine Überleitung (8) mit dem Zulauf (1) zum Anaerobreaktor (2) nach der Trenneinrichtung (6) und/oder direkt mit dem Anaerobreaktor (2) verbunden ist.

8. Vorrichtung nach Anspruch 6 oder 7, dadurch gekennzeichnet, daß in dem Behandlungsreaktor (7) ein Trägermaterial vorhanden ist.

## Claims

1. A process for the anaerobic biological purification of waste water which contains organic substances with the aid of anaerobic micro-organisms, characterised in that, prior to the introduction of the main stream of the waste water to be purified into a reactor which is operated under anaerobic conditions, substances which can only be slowly metabolized under anaerobic conditions and which are partially present in the undissolved and partially in the macro-molecular state, are separated from the waste water in a secondary stream and treated independently of the substances which remain in the main stream of the waste water to be purified and which can be rapidly decomposed by anaerobic micro-organisms.

2. A process as claimed in Claim 1, characterised in that the substances separated in the secondary stream are concentrated for further processing and at least in part subjected to anaerobic conditions.

3. A process as claimed in Claim 1 or Claim 2, characterised in that the substances treated in the secondary stream are supplied to the reactor which is arranged in the main stream and operated under anaerobic conditions.

4. A process as claimed in Claim 1 or Claim 2, characterised in that the treatment of the substances which are separated in the secondary flow is carried out at least in part under aerobic conditions.

5. A process as claimed in one of Claims 1 to 4, characterised in that the separation of the substances which can be slowly metabolized is carried out in a mechanical manner with the addition of precipitation and/or flocculation and/or adsorption agents.

6. Apparatus for carrying out the process as claimed in one of Claims 1 to 4 comprising at least one anaerobic reactor which is operated under anaerobic conditions and which has an inlet for the waste water to be treated, an outlet for purified waste water and a gas discharge line for foul gas, characterised in that the inlet (1) for the waste water to be treated is alloted both an addition device (5) for precipitation and/or flocculation and/or adsorption agents and at least one separating device (6) for undissolved and/or flocculated and/or adsorbed substances ; and that a treatment reactor (7) for the treatment of the separated substances is connected to the separating device (6).

7. Apparatus as claimed in Claim 6, characterised in that the treatment reactor (7) is connected by way of a transfer line (8) to the inlet (1) to be anaerobic reactor (2) downstream of the separating device (6) and/or directly to the anaerobic reactor (2).

8. Apparatus as claimed in Claim 6 or Claim 7, characterised in that a carrier material is provided in the treatment reactor (7).

## Revendications

1. Procédé de purification biologique anaérobie d'eaux usées contenant des substances organiques à l'aide de micro-organismes anaérobies, caractérisé en ce que, avant l'introduction du courant principal d'eau usée à purifier dans un réacteur fonctionnant dans des conditions anaérobies, on sépare de cette eau usée et l'on fait passer dans un courant secondaire les substances qui sont en partie non dissoutes, et en partie à l'état macromoléculaire et qui ne se métabolisent que lentement dans des conditions anaérobies, on les traite indépendamment des substances qui restent dans le courant principal de l'eau usée à purifier et qui sont dégradées rapidement par les micro-organismes anaérobies.

2. Procédé selon la revendication 1, caractérisé en ce que les substances séparées dans le courant secondaire sont reconcentrées en vue d'un traitement ultérieur et sont au moins partiellement exposées à des conditions anaérobies similaires.

3. Procédé selon la revendication 1 ou 2, caractérisé en ce que les substances traitées dans le courant secondaire sont amenées au réacteur disposé dans le courant principal et fonctionnant dans des conditions anaérobies.

4. Procédé selon la revendication 1 ou 2, caractérisé en ce que le traitement des substances séparées dans le courant secondaire se fait au moins partiellement dans des conditions aérobies.

5. Procédé selon l'une quelconque des revendications 1 à 4, caractérisé en ce que la séparation des substances qui ne se métabolisent que lentement se fait par voie mécanique avec addition d'agents de précipitation et/ou de floculation et/ou d'adsorption.

6. Dispositif de mise en œuvre du procédé selon l'une quelconque des revendications 1 à 4, à l'aide d'au moins un réacteur anaérobie fonctionnant dans des conditions anaérobies comportant une conduite d'arrivée de l'eau usée à traiter, une conduite de départ de l'eau usée purifiée ainsi qu'une conduite de départ du gaz de digestion, caractérisé en ce que, à la conduite d'amenée (1) de l'eau usée à traiter, on associe une installation (5) d'introduction d'agents de précipitation et/ou de floculation et/ou d'adsorption ainsi qu'au moins une installation (6) de séparation des substances non dissoutes et/ou floculées et/ou adsorbées et en ce que, à l'installation (6) de séparation, on raccorde un réacteur de traitement (7) pour le traitement des substances séparées.

7. Dispositif selon la revendication 6, caractérisé en ce que le réacteur de traitement (7) est relié par un conduit de transfert (8) à la conduite (1) d'amenée au réacteur anaérobie (2) à l'aval de l'installation de séparation (6) et/ou directement au réacteur anaérobie (2).

8. Dispositif selon la revendication 6 ou 7, caractérisé en ce qu'un matériau support est disposé dans le réacteur de traitement (7).